# EUROPEAN PATENT APPLICATION

(11) **EP 4 138 018 A1**
(43) Date of publication of application: **22.02.2023**
(21) Application number: 21817582.6
(22) Date of filing: 15.05.2021
(51) Int. Cl.: G06Q 30/02, G06F 13/00

(54) **INFORMATION PROCESSING DEVICE, INFORMATION PROCESSING PROGRAM, AND SUPPORTED MEDIUM**

(30) Priority: 30.05.2020 JP 2020095139
(71) Applicant: Contentsrights LLC, Tokyo, 131-0032 (JP)
(72) Inventor: WATANABE Kazuhiro, Tokyo 131-0032 (JP)
(74) Representative: Cabinet Netter
(86) International application number: PCT/JP2021/018517
(87) International publication number: WO 2021/246138

(57) **Abstract**

It is an object of the present invention to provide an information processing device related to electronic commerce that can efficiently or constantly obtain information on consumer needs regarding the specifications of products, etc. that have not yet been provided from information in search queries entered by general consumers.

The present invention provides an information processing device comprising: a storage means for storing information such as product or service information related to products or services; a product or service information search and acquisition means for searching for and acquiring product or service information registered in the storage means based on a search query inputted by a first user; a search result displaying means for displaying results searched for and acquired by the product or service information search and acquisition means to a first user in a selectable manner; and a search query information outputting means for integrating or associating the products or services displayed by the search result displaying means with the information indicating whether or not the products or services have been selected by the first user and outputting or storing the information in the search query inputted by the first user.

## Description

### [Technical Field]

The present invention relates to an information processing device, information processing program, and computer-readable medium for electronic commerce (EC) that facilitates the transaction of product and service information over the internet.

### [Background Art]

In the field of product planning and development by manufacturers, etc., planners and developers take the lead in conducting market research, etc., and specifications, designs, and prices are researched and selected in anticipation of customer needs, before developing and launching the final product. However, until the final product is actually offered on the market, it will remain unclear whether the product matches expected customer needs, and the product may never be fully accepted on the market.

In response to this problem, Patent Document 1 has disclosed a customer-led product development system that facilitates customer-led product development in which customers come up with new product development ideas and participate in new product planning. In this system, information about new product development concepts is received, information about received development concepts is saved, information about stored development concepts is disclosed, information about ideas posted by other customers based on information about disclosed development concepts is received, information about received ideas is stored, and the exchange of information between the developer of the development concept and those who posted ideas is controlled so as to at least include the conditions for commercialization associated with the negotiations.

Patent Document 2 has disclosed a product specifications and related customer information collecting system in which proposed product ideas are shown to users to obtain user wishes regarding product specifications, to determine the final product specifications, and to grasp demand for the product so that users can obtain a product with the desired specifications at a relatively low price.

Patent Document 3 discloses an electronic commerce server device that classifies products and services by categories deemed appropriate by users in which a counter is used to count which keywords were used to search for a product when users search for the product using a category as a keyword, and another category is added to the conventional category as the category of the product when searches are frequently performed using a keyword that represents a different category from the conventional category.

Patent Document 4 discloses an information providing device that acquires behavioral information related to search behavior by users on electronic commerce sites up to and including indicators such as the details on the product screens of electronic commerce sites displayed to users in response to searches, evaluates the search behavior for products based on the acquired indicators, and proposes sales activities for a product to vendors that handle the product based on the evaluation results.

Patent Document 5 provides an online shopping management device that allows users to easily identify product attributes such as target gender, price, target age, and size by conducting product searches based on search conditions received from the user terminals, extracting and clustering the attribute values for a plurality of predetermined product attributes from the search results, and assigning different color information to each cluster in the portion of a display showing clustered product attributes.

Patent Document 6 discloses a crowdfunding system that can aggregate feedback information including advice and opinions from investors by aggregating investor feedback on items provided by a crowdfunded business based on the investor attribute information, and sending the results to the business.

### [Citation List]

### [Patent Literature]

[Patent Document 1] JP 2004-46368 A
[Patent Document 2] JP 4361235 B2
[Patent Document 3] JP 6056327 B2
[Patent Document 4] JP 6305595 B2
[Patent Document 5] JP 5265414 B2
[Patent Document 6] JP 6626402 B2

### [Summary of Invention]

### [Technical Problem]

None of the prior art techniques disclosed in the patent documents mentioned above involve searching for and acquiring product and service information based on search queries including, for example, keywords entered by users, presenting the product and service information to the users in a selectable manner, associating search queries entered by users with the information on whether or not a product or service has been selected, and outputting or storing the associated information to efficiently obtain information on user needs regarding the specifications of products or services that have not yet been provided.

It is an object of the present invention to solve this problem by providing an information processing device related to electronic commerce that can efficiently or constantly obtain information on consumer needs regarding the specifications of products, etc. that have not yet been provided from information in search queries entered by general consumers.

### [Solution to Problem]

In order to achieve this object, the information processing device in one aspect of the present invention comprises:
a storage means for storing information such as product or service information related to products or services;
a product or service information search and acquisition means for searching for and acquiring product or service information registered in the storage means based on a search query inputted by a first user;
a search result displaying means for displaying results searched for and acquired by the product or service information search and acquisition means to a first user in a selectable manner; and
a search query information outputting means for integrating or associating the products or services displayed by the search result displaying means with the information indicating whether or not the products or services have been selected by the first user and outputting or storing the information in the search query inputted by the first user.

### [Advantageous Effects of Invention]

The present invention is able to efficiently or constantly obtain information on consumer needs regarding the specifications of products, etc. that have not yet been provided.

### [Brief Description of Drawings]

[Fig. 1]

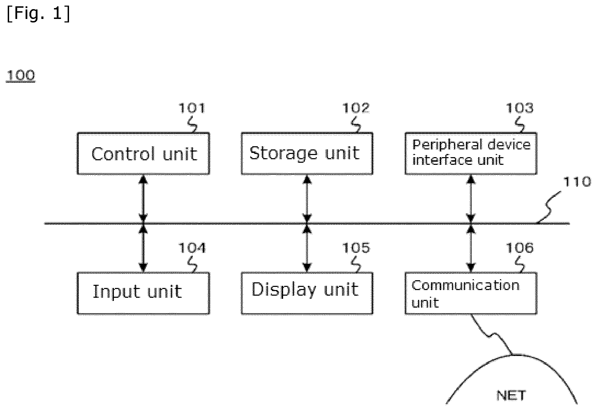

   Fig. 1 is a diagram showing the basic configuration of the electronic commerce information processing device in an embodiment of the present invention.
[Fig. 2]

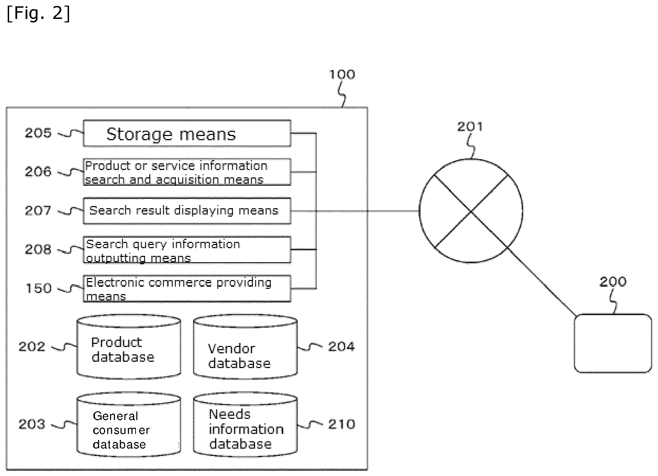

   Fig. 2 is a diagram showing the overall system configuration of an electronic commerce site including the information processing device in an embodiment of the present invention.
[Fig. 3]

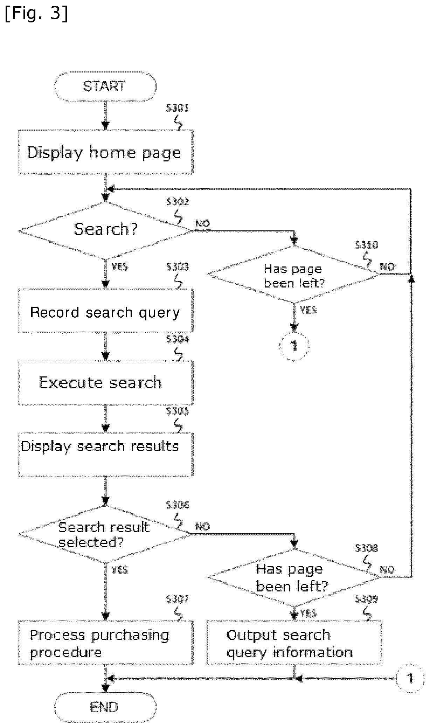

   Fig. 3 is a flowchart of the decision processing flow performed by the control unit 101 in the information processing device in an embodiment of the present invention up to and including searching for and displaying product or service information using search queries entered from user terminals, associating the displayed product or service information with information indicating whether or not the product or service has been selected, and outputting the inputted search query information.
[Fig. 4]

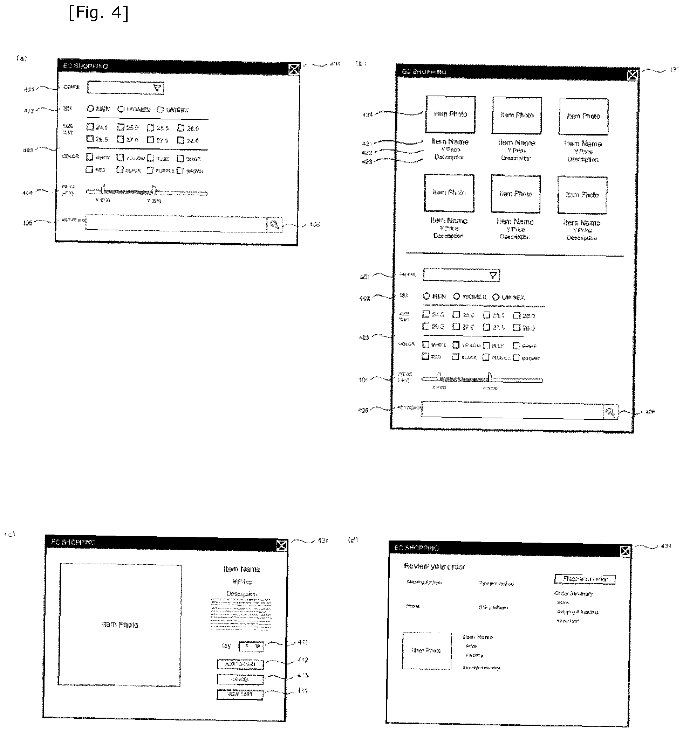

   Fig. 4 is a set of diagrams showing screens (screen transitions) of an electronic commerce site displayed by the information processing device in an embodiment of the present invention on the user terminal of a general consumer.
[Fig. 5]

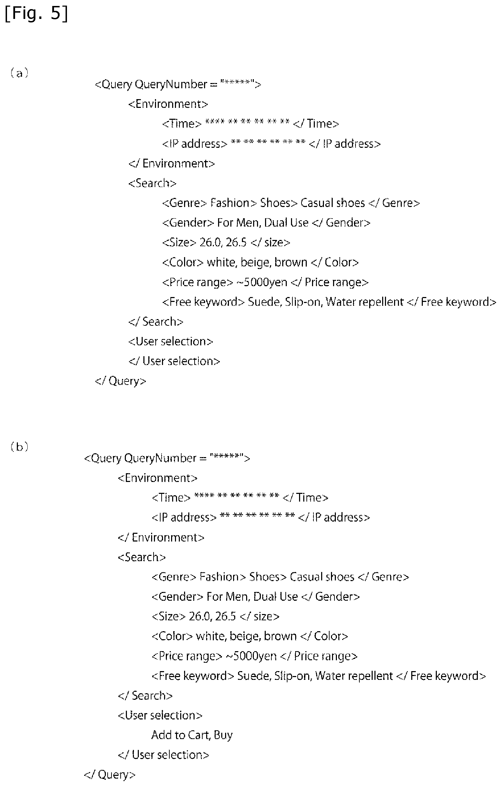

   Fig. 5 is a diagram showing an example of search query information.
[Fig. 6]

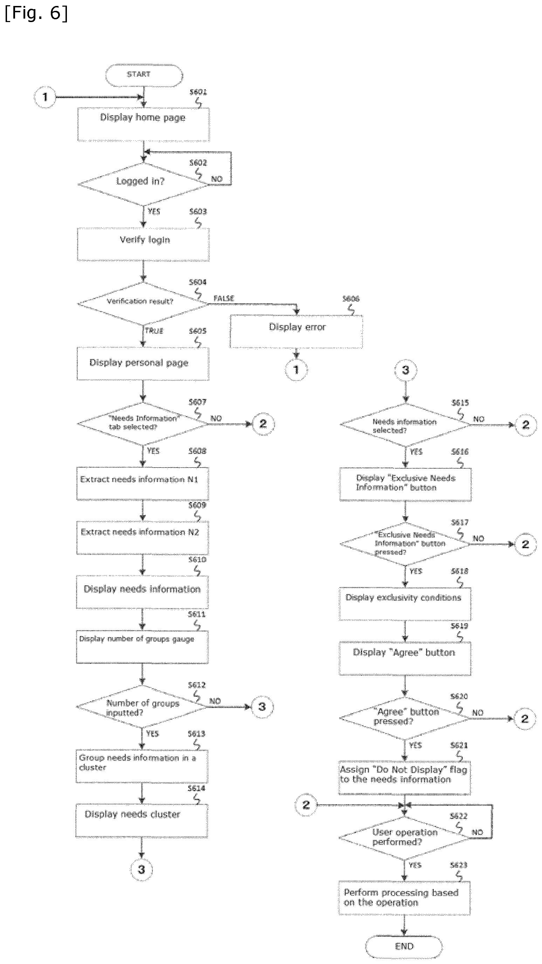

   Fig. 6 is a flowchart of the decision processing flow performed by the information processing device in an embodiment of the present invention to hide needs information from other users (vendors) when needs information has been displayed on the user terminal of a second user and the displayed needs information has been selected by the second user.
[Fig. 7]

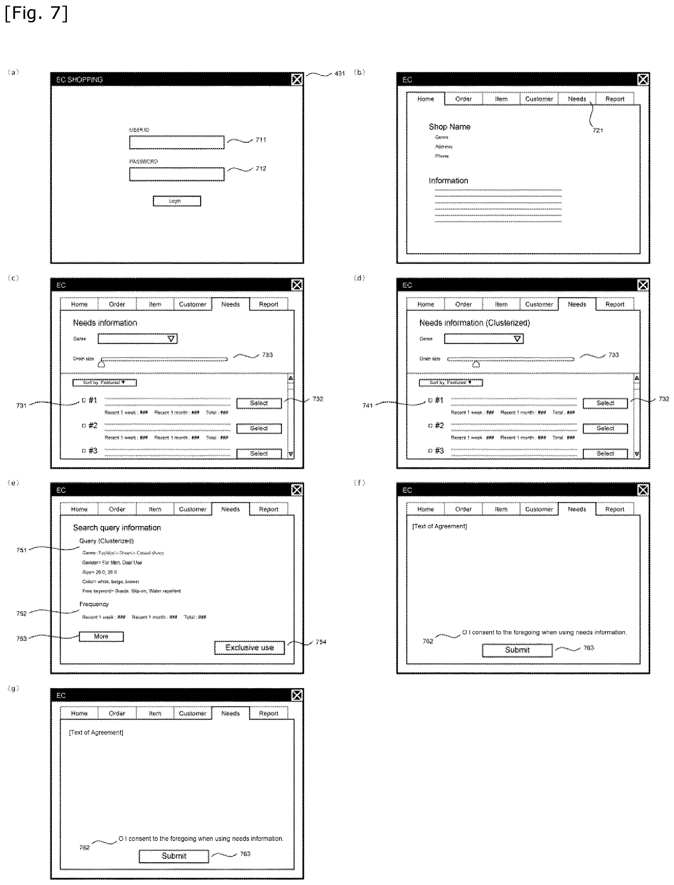

   Fig. 7 is a set of diagrams showing screens (screen transitions) of an electronic commerce site displayed by the information processing device in an embodiment of the present invention on the user terminal of a vendor.
[Fig. 8]

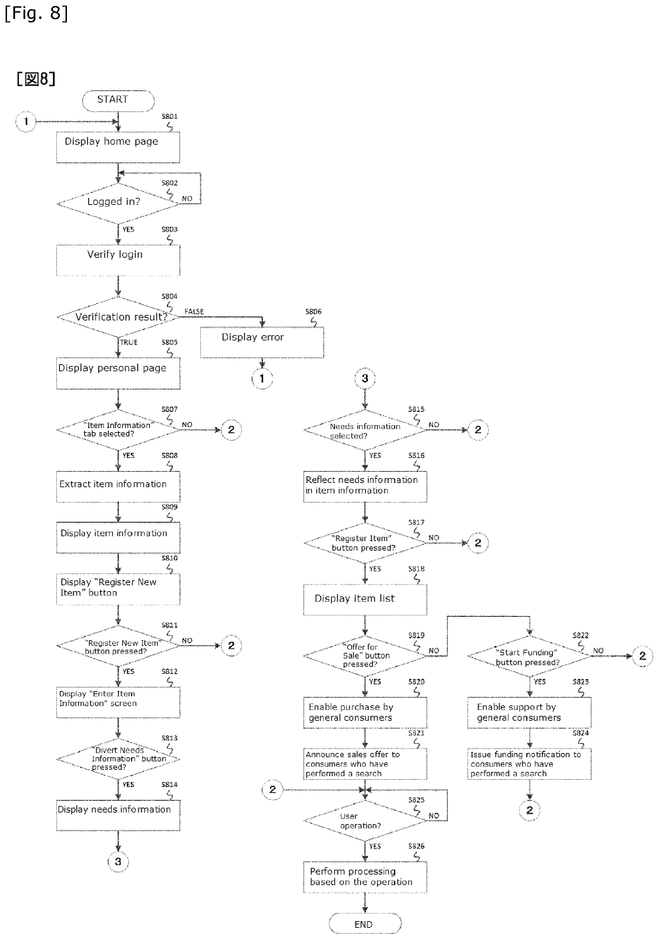

   Fig. 8 is a flowchart of the decision processing flow performed by the control unit 101 in the information processing device in an embodiment of the present invention up to and including notifying a consumer who entered search query information on which the needs information is based that a vendor has planned a product or service based on selected needs information and has released the product or service or initiated funding.
[Fig. 9]

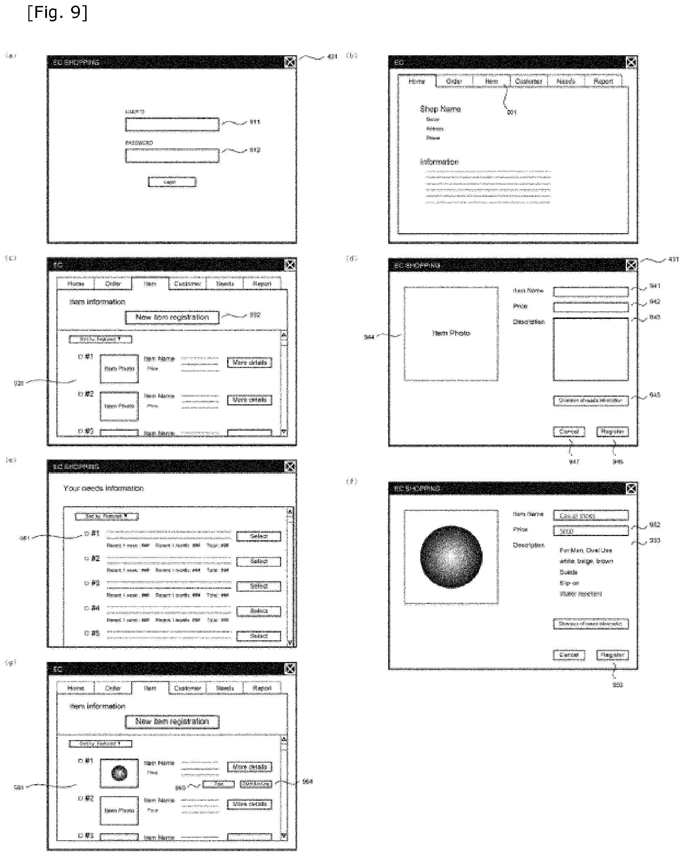

   Fig. 9 is a set of diagrams showing screens (screen transitions) of an electronic commerce site displayed by the information processing device in an embodiment of the present invention on the user terminal of a vendor.
[Fig. 10]

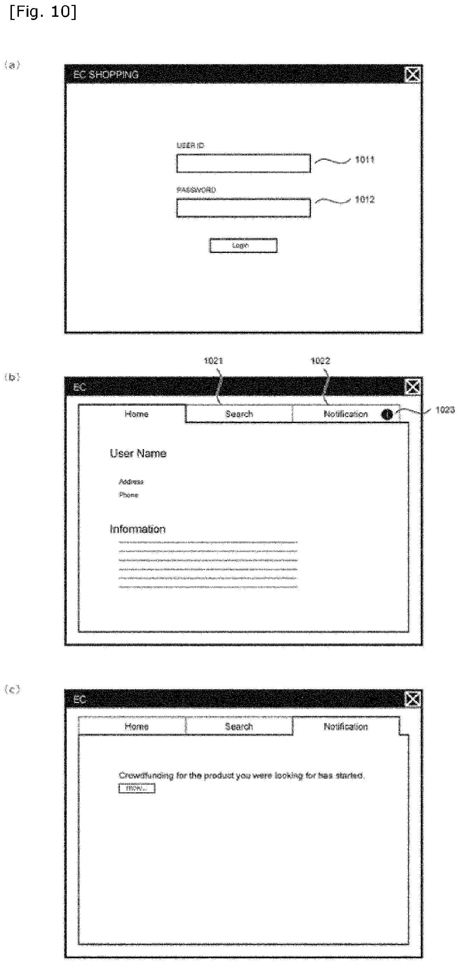

   Fig. 10 is a set of diagrams showing screens (screen transitions) of an electronic commerce site displayed by the information processing device in an embodiment of the present invention on the user terminal of a general consumer.

### [Description of Embodiments]

An information processing device, information processing method, and information processing program in an embodiment of the present invention will now be described with reference to the drawings. In the following description, electronic commerce (EC) refers to the sale or purchase of products or services over the internet, and includes electronic shopping malls, internet auctions, and so-called "flea markets".

### (Example 1)

Example 1 is an electronic commerce information processing device in which a search for product or service information using an entered search query is displayed to a first user (general consumer) in a selectable manner, the displayed product or service information is associated with information indicating whether or not the product or service has been selected, and the inputted search query information is outputted.

Fig. 1 is a diagram showing the basic configuration of the electronic commerce information processing device in an embodiment of the present invention.

In Fig. 1, 100 is a server device at an electronic commerce site. The server device 100 at the electronic commerce site provides a search service to more than one user terminal via a network, and also provides an electronic retail function.

The server device 100 at the electronic commerce site includes a control unit 101, a storage unit 102, a peripheral device interface unit 103, an input unit 104, a display unit 105, and a communication unit 106, all connected via a bus 110. It should be noted that this configuration is merely an example, and other configurations can be adopted when appropriate.

The control unit 101 is composed of a CPU (central processing unit), a ROM (read-only memory), and a RAM (random-access memory). The CPU calls a program stored in the storage unit 102, the ROM, or a recording medium into a work memory area in the RAM and executes it to drive and control each device connected via the bus 109 and perform processing using the computer. The ROM is a non-volatile memory and holds the boot-up program for the server device 100, programs such as a BIOS, and data. The RAM is a volatile memory that includes a work area used by the control unit 101 to perform various processes while temporarily holding programs and data loaded from the storage unit 102, the ROM, or a recording medium.

The storage unit 102 can be, for example, an HDD (hard disk drive) that stores programs executed by the control unit 101, information on products and services handled by the electronic commerce site, and other types of data. The programs include program code that functions as the product or service information search and acquisition means 206, the program code that functions as the search result displaying means 207, the program code that functions as the search query information outputting means 208, and the program code that functions as the electronic commerce providing means 150 described later. Each of these program codes is retrieved by the control unit 101 as needed, transferred to the RAM, and executed by the CPU to cause the computer to function as the various means described above.

The peripheral device interface (I/F) unit 103 is a port for connecting the server device 100 at the electronic commerce site to peripheral devices. The peripheral device interface unit 103 can be, for example, USB, IEEE1394, or RS-232C. The connection to peripheral devices may be wired or wireless.

The input unit 104 has an input device such as a keyboard and numeric pad or a pointing device such as a mouse to give operational instructions to the server device 100 and input data.

The display unit 105 is a logic circuit or a device driver for displaying video or still images from the server device 100 at the electronic commerce site on a display device such as a liquid crystal panel.

The communication unit 106 has a communication control device and a communication port, and is a wired or wireless communication interface that facilitates communication between the server device 100 at the electronic commerce site and the network.

The bus 110 is a path that facilitates the exchange of control signals and data signals between devices.

Fig. 2 is a diagram showing the overall system configuration of an electronic commerce site including the information processing device in an embodiment of the present invention. In Fig. 2, 100 is a server device at an electronic commerce site that provides a search service to more than one user terminal via a network, and also provides an electronic retail function.

The network 201 is a combination of a plurality of networks via a gateway such as the internet, and can be composed of a LAN (local area network), a public telephone network, and/or a mobile communication network to facilitate the exchange of information between user terminals 200 and the server device 100 at the electronic commerce site.

The server device 100 at the electronic commerce site is a server that provides a search service and an electronic store function to user terminals 200, and includes: a product or service database 202 that stores product or service identifiers (IDs) for products and services sold at an electronic retailer, product or service names, prices, descriptions of products including images, and product or service types/categories, specifications, and vendors (manufacturers/retailers); a general consumer database 203 that stores information about general consumers such as identifiers (IDs), attributes, search histories, and purchase histories of general consumers at electronic retailers; a vendor database 204 that stores information about vendors of products or services such as identifiers (IDs), attributes, and products or services provided by product or service vendors (manufacturers/retailers); and a needs information database 210 that associates and stores the information in search queries entered by users with user selection operations in the search results.

The server device 100 also includes a storage means 205 for storing product or service information in the product or service database 202, a product or service information search and acquisition means 206 for searching for and acquiring product or service information using search queries entered from a user terminal, a search result displaying means 207 for displaying the search results for product and service information on a user terminal 200, a search query information outputting means 208 for associating search results for product or service information with selection operations performed on search results and outputting or storing search query information entered from user terminals, and an electronic commerce providing means 150 for providing other general electronic commerce functions.

Note that the product or service information search and acquisition means 206, the search result displaying means 207, the search query information outputting means 208, and the electronic commerce providing means 150 are realized as software by the control unit 101, which retrieves and executes program code stored in the storage unit 102.

Fig. 3 is a flowchart of the decision processing flow performed by the control unit 101 in the information processing device in an embodiment of the present invention up to and including searching for and displaying product or service information using search queries entered from user terminals, associating the displayed product or service information with information indicating whether or not the product or service has been selected, and outputting the inputted search query information.

The server device 100 at the electronic commerce site in the embodiment of the present invention displays the home page of the electronic commerce site on (the display unit of) the user terminal 200 (S301). When a search query has been entered using a user terminal 200 to make a search request for a product or service (YES in S302), the search query is recorded (S303) and a product or service search is performed (S304). The search results are then displayed on the user terminal 200 (S305).

When recording a search query in S303, environmental variables such as the date and time of the search, the type of terminal used, the language, and the IP address are recorded when appropriate.

When a search result has selected by the user of the user terminal 200 (YES in S306), the server device 100 processes the selected product or service according to, for example, the purchase procedure (S307). When none of the search results is selected (NO in S306), it is determined whether a page exit operation has been performed by the user (S308). When a page exit operation has been performed (YES in S308), the search query information is associated with information indicating that a search result was not selected, and then outputted or recorded (S309).

Fig. 4 is a set of diagrams showing screens (screen transitions) of an electronic commerce site displayed by the information processing device in an embodiment of the present invention on the user terminal of a general consumer.

Fig. 4 (a) shows the screen for receiving search queries entered by users, which includes a drop-down menu for entering and selecting types or categories of products or services 401, a radio button 402 for selecting male, female or unisex, check boxes 403 for selecting size and color, a bar 404 for entering the price range, a text box for freely entering keywords 405, and a button 406 for executing the search.

Although not shown, a search query can also include images or audio for performing fuzzy searches, and logical operators that link search conditions as a range. These can be entered and received using GUI objects (known as "controls") such as text boxes, check boxes, combo boxes, spin boxes, radio buttons, and graphic fields.

When the user issues an instruction to execute the search, the server device 100 performs a search using the entered search query and displays search results as shown in Fig. 4 (b).

In Fig. 4 (b), the product name 421, the price 422, the features or specifications 423, and a product image 424 of one or more products that achieved a hit in the search are displayed. In Fig. 4 (b), the drop-down menu 401, the radio button 402, the check box 403, the bar 404, the text box 405, and the button 406 displayed in Fig. 4 (a) remain the same, so that items can be added or changed in the search query before performing another search.

When one of the products on the screen in Fig. 4 (b) has been selected and an instruction issued by the user, the screen transitions to the screen for explaining the detailed features and specifications of the product shown in Fig. 4 (c). Fig. 4 (c) also displays a quantity setting dropdown menu 411, an "add to cart" button 412, a "cancel" button 413, and a "view cart" button 414.

When the user selects the "view cart" button 414 on the screen in Fig. 4 (c), the screen transitions to the screen for performing the purchase procedure shown in Fig. 4 (d).

When the user selects the "close" button 431 on any of the screens, display of the electronic commerce site on the display unit of the user terminal is terminated.

Fig. 5 is a diagram showing an example of search query information recorded in S303, S307, and S311 of Fig. 3 and outputted in S312.

Fig. 5 (a) is an example of the search query information in the initial search performed by the user.

Fig. 5 (b) is an example of the search query information when the user has selected the "add to cart" button and started the purchase procedure.

When product information has not been selected by the user, the same information as in Fig. 5 (a) is outputted except that the value for "user selection" remains empty (NULL).

In this way, the information processing device outputs the information of the search query corresponding to whether the searched product is either selected or not selected by the first user. (Hereinafter, information from a search query associated with information on whether product or service information has been selected or not is referred to as "needs information".) This makes it possible to obtain information on consumer needs in relation to, for example, product specifications.

For example, when a query such as "Men's, 26.0, Beige, ~ 5000 yen, Suede, Slip-ons" is carried out and none of the displayed products are selected by the user, it can be assumed that none of the products available on the electronic commerce site meets the needs of the user (general consumer) sufficiently. Therefore, the specifications expressed in the search query can be combined with specifications not shown in the search query, such as those for design and taste, in an advantageous manner for the planning and development of new products. Because products and services are searched for on an electronic commerce site on a daily basis, information on consumer needs can be obtained much more efficiently than from market research conducted by questionnaire. Specifications that do not appear in search queries can also be derived using a statistical method from information on the attributes (age, gender, income, occupation, academic background, lifestyle, personality, preferences, etc.) of users (general consumers) and from information on the regions, languages, and time zones in which searches are conducted.

By outputting search query information over a predetermined period of time, such as weekly, monthly or yearly, information on consumer needs that can be referenced for product planning, development, and production planning is obtained on a regular basis.

In other words, an information processing device of the present invention can efficiently or constantly obtain information on consumer needs in relation to product or service specifications.

As a result, manufacturers and others can plan or launch products and services that are more likely to be favorably received on the market by meeting the assumed customer needs.

### (Example 2)

Example 2 is an electronic commerce device comprising a needs information displaying means for displaying search query information associated with information on whether or not product or service information was selected and outputted by the search query information outputting means ("needs information") to a second user (that is, "vendor") in a selectable manner, and a needs information display control means that can hide or disable selection of needs information selected by the second user by other users.

Fig. 6 is a flowchart of the decision processing flow performed by the information processing device in an embodiment of the present invention to hide needs information from other users (vendors) when needs information has been displayed on the user terminal of a second user and the displayed needs information has been selected by the second user.

The server device 100 at the electronic commerce site in the second embodiment of the present invention displays the home page of the electronic commerce site on (the display unit) of the user terminal 200 used by the second user (S601). When the login procedure has been performed by the vendor on the homepage of the electronic commerce site (YES in S602), the user authenticates with the entered ID and password (S603). When the authentication result is positive (YES in S604), a personalized page is displayed to the vendor (S605). When the authentication result is negative in S604 (NO in S604), a login error is displayed (S606) and the process returns to S601.

When the "needs information" tab has been selected on the personalized page of the vendor (YES in S607), the server device 100 extracts needs information N1 corresponding to the types or categories of products and services offered by the vendor from the needs information database 210 (S608). Needs information N2 without "hide flags" is then extracted from the needs information N1 (S609).

The extracted needs information is then displayed, for example, in descending order in terms of quantity (S610). A gauge is also displayed for inputting the number of groups (clusters) based on similar needs information (S611). When the gauge is operated by the user to enter the number of groups (YES in S612), the needs information is grouped into the selected number of groups (clusters) (S613), and the aggregated needs information clusters are displayed, for example, in descending order in terms of quantity (S614).

When needs information (or needs information clusters) have been selected by the user (YES in S615), the server device 100 displays the needs information details (search query information and information about the attributes of the user (general consumer) who entered the search query), and a button for selecting a vendor with whom to make the needs information exclusive is displayed (S616). When the "exclusive needs information" button is pressed for a vendor (YES in S617), the server device 100 displays the conditions for assigning the needs information exclusively to the vendor (S618). A button is also displayed to indicate that the user accepts the conditions (S619). When the button has been selected by the user (YES in S620), the needs information assigned exclusively to the vendor (or all needs information composing a needs information cluster) is flagged as "hidden" (S621). As a result, the needs information is hidden from other users.

When a vendor indicates its intention to handle the needs information exclusively under certain conditions, the user may be authenticated using a personalized number card and a digital signature. According to the Japanese Act on Electronic Signatures and Authentication (Act No. 102 of 2000), the authenticity of a data use agreement is verified by an electronic signature that can be performed only by the person himself or herself because it is assumed that it was genuinely enacted (created based on the person's will).

The server device 100 determines whether or not an operation has been performed by the user in S622. When a user operation has been performed, the server device performs the processing corresponding to the operation (S623) and ends the processing flow.

Fig. 7 is a set of diagrams showing screens (screen transitions) of an electronic commerce site displayed by the information processing device in the second embodiment of the present invention on the user terminal of a vendor.

Fig. 7 (a) shows a login screen with a user ID input section 711 and a password input section 712.

When the user has logged in and the result of password authentication is positive, the screen transitions to Fig. 7 (b).

Fig. 7 (b) is a personalized page for the vendor user.

When the user has selected the "needs information" tab 721, the screen transitions to Fig. 7 (c).

Fig. 7 (c) is a needs information display screen, which has needs information 731, a needs information selection button 732, and a size input gauge 733.

When the size input gauge 733 is operated by the user to enter the cluster size, the screen transitions to Fig. 7 (d).

Fig. 7 (d) is a screen for displaying clustered needs information, and has needs information clusters 741.

When the user operates the needs information selection button 732, the screen transitions to Fig. 7 (e).

Fig. 7 (e) is a screen that displays selected needs information (or needs information cluster) details, and search query information 751 constituting the needs information and hit number information 752 over a predetermined period of time are displayed. Fig. 7 (e) also shows a button 753 that displays details such as the date and time of the search and the attributes of the general consumer user who performed the search, and an exclusive needs information selection button 754 for indicating that a vendor has been assigned exclusively to the needs information.

When the user has selected the exclusive needs information selection button 754, the screen transitions to Fig. 7 (f).

Fig. 7 (f) is a screen that displays the conditions assigning needs information exclusively to the user. Fig. 7 (f) indicates that consideration will be charged as a condition for assigning the needs information exclusively to the user.

Fig. 7 (g) displays a screen different from the one displayed in Fig. 7 (f) as a condition for assigning the needs information exclusively to the user. Fig. 7 (g) indicates that, as a condition for assigning the needs information exclusively to the user, products or services developed based on the needs information will be available only on the electronic commerce site (or with its involvement).

Fig. 7 (f) and (g) have a consent confirmation check box 762 and a submit button 763. When the user has checked the consent confirmation check box 762 and pressed the send button 763, the information processing device in the second embodiment of the present invention executes a procedure for assigning specific needs information exclusively to a specific vendor.

In this way, the information processing device of the present invention can apply certain conditions to a specific vendor user for exclusive use of information on specifications for products or services demanded by general consumers that no products on the electronic commerce site fully meet.

Because certain needs and products that satisfy these needs are not supplied, this information can be said to be information on potential (niche) markets.

Potential (niche) markets are attractive to vendors because there is no competition. When information about potential (niche) markets is widely shared, its attractiveness (value) is reduced.

Therefore, the value of information can be maintained by assigning a specific vendor user exclusive use and making the information unavailable to other users.

If a consideration is charged when exclusive use of needs information is assigned to a specific user, a profit can be made based on the value of the information.

If, when assigning needs information to a specific user, products or services developed based on the needs information are to be available only on the electronic commerce site (or with its involvement), the products or services available on the electronic commerce site can be expected to become more attractive as they better meet the needs of consumers. As a result, the electronic commerce site can be expected to expand sales and profits and acquire new users (both consumer users and vendor users).

In addition, exclusive use of clustered needs information that aggregates relatively similar needs information can be assigned to a specific vendor, and other vendors can be prevented from using the clustered needs information or the needs information that composes the clustered needs information. When similar needs information is aggregated in a cluster, the target specifications of the products or services become blurred (and less likely to meet the needs of individual users), but the number of consumers related to those needs increases (and the market size for products based on that need expands). Therefore, a vendor user can assume that there will be a suitable market based on the "marginal profit" and "break-even point" of the products to be developed, and obtain the corresponding needs information (clustered needs information).

### (Example 3)

Example 3 is an electronic commerce information processing device that notifies consumer users who have entered search query information that products or services based on their needs information are being planned.

Fig. 8 is a flowchart of the decision processing flow performed by the control unit 101 in the information processing device in an embodiment of the present invention up to and including notifying a consumer who entered search query information on which the needs information is based that a vendor has planned a product or service based on selected needs information and has released the product or service or initiated funding.

The server device 100 at the electronic commerce site in the third embodiment of the present invention displays the home page of the electronic commerce site on (the display unit of) the user terminal 200 of a vendor user (S801). When the login procedure has been performed by the vendor on the homepage of the electronic commerce site (YES in S802), the user authenticates with the entered ID and password (S803). When the authentication result is positive (TRUE in S804), a personalized page is displayed to the vendor (S805). When the authentication result is negative in S804 (FALSE in S804), a login error is displayed (S806) and the process returns to S801.

When the "item information" tab has been selected on the personalized page of the vendor (YES in S807), the server device 100 extracts item information such as products or services featured by the vendor from the product database 202 (S808), and displays the extracted item information such as products and services based on their control numbers (S809). A register new item button is also displayed (S810).

When the register new item button is selected by the user (YES in S811), the enter item information screen is displayed (S812). The enter item information screen has input fields for product names, prices, features or specifications, product images, and remarks. The screen also has a divert needs information button, a register item button, and a cancel button.

When the divert needs information button is selected by the user (YES in S813), the needs information (or needs information clusters) that is exclusively available to the user is displayed in a list (S814). When needs information (or a needs information cluster) is selected by the user (YES in S815), details from the needs information (or needs information cluster) such as "price" or "features and specifications" are reflected in the "price" or "features and specifications" column of the enter item information screen (S816). The user can edit the "price" and "features and specifications" fields to change the price and add or change the features and specifications. It is also possible to enter a product or service name or a product or service image.

When the register item button is selected by the user on the enter item information screen (YES in S817), an item list including newly registered items is displayed (S818). An on-sale button and a start funding button are displayed beside the newly registered items in the item list.

When the on-sale button has been selected by the user (YES in S819), the server device 100 performs processing to make the item available for purchase to general consumers on the electronic commerce site (S820), and notifies consumers who have entered search query information composing the needs information (or clustered needs information) based on the "features and specifications" of the item in the information related to the item (S821). The notification can state, for example, "a product that you (consumer's name) have been looking for is now for sale." Various methods can be used to notify consumers, for example, sending an e-mail or displaying a notice in the "notification" column of the electronic commerce site.

Also, when the vendor user selects the start funding button (YES in S822), the server device 100 performs processing to enable those in a crowdfunding system to "support" the item (S823).

Here, the crowdfunding system refers to a network of websites that accepts "support" such as funding via the network. Types of support include purchases, donations, and financing. In purchase crowdfunding, a collection target amount and deadline are set for items such as products. When the target amount of money has been collected within the deadline, the item such as a product or service is provided to the supporters. (If the target amount is not reached, the support money is returned.)

The server device 100 also sends a crowdfunding notice to consumers who have entered the search query information constituting the needs information (or clustered needs information) forming the basis of the item's features and specifications (S824). The notification can state, for example, "crowdfunding has started for a product that you (consumer's name) have been looking for." Various methods can be used to notify consumers, for example, sending an e-mail or displaying a notice in the "notification" column of the electronic commerce site.

The server device 100 determines whether or not an operation has been performed by the user in S825, and when a user operation has been performed, executes processing corresponding to the operation (S826) and then terminates the flow.

Fig. 9 is a set of diagrams showing screens (screen transitions) of an electronic commerce site displayed by the information processing device in an embodiment of the present invention on the user terminal of a vendor.

Fig. 9 (a) shows a login screen with a user ID input section 911 and a password input section 912.

When the user has logged in and the result of password authentication is positive, the screen transitions to Fig. 9 (b).

Fig. 9 (b) is a personalized page for a vendor user.

When the user has selected the item information tab 921, the screen transitions to Fig. 9 (c).

Fig. 9 (c) is an item information display screen, which has a product information list 931 and a register new item button 932.

When the user has selected the register new item button 932, the screen transitions to Fig. 9 (d).

Fig. 9 (d) is an enter item information screen, which has a product name entry field 941, a price entry field 942, a feature and specification entry field 943, and a product image entry field 944. It also has a divert needs information button 945, a register item button 946, and a cancel button 947.

When the user selects the divert needs information button 945, the screen transitions to Fig. 9 (e).

Fig. 9 (e) has a list of needs information 951 that is exclusively available to the user.

When needs information on the list 951 has been selected by the user, the screen transitions to Fig. 9 (f).

Fig. 9 (f) is the same enter item information screen as in Fig. 9 (d) in which the price and the specifications and features of the selected needs information are reflected in the price entry field 952 and the specifications and features entry field 953. Fig. 9 (f) also has an register item button 956.

When the user selects the register item button 956, the screen transitions to Fig. 9 (g).

FIG. 9 (g) is an item information display screen similar to FIG. 9 (c), and has an item list 961 including newly registered items. An on-sale button 963 and a start funding button 964 are displayed beside the newly registered items in the item list.

Fig. 10 is a set of diagrams showing screens (screen transitions) of an electronic commerce site displayed by the information processing device in the third embodiment of the present invention on the user terminal of a general consumer.

Fig. 10 (a) shows a login screen with a user ID input section 1011 and a password input section 1012.

When the user has logged in and the result of password authentication is positive, the screen transitions to Fig. 10 (b).

Fig. 10 (b) is a personalized page for a general consumer user, which has a search tab 1021, a notice tab 1022, and a new notice icon 1023.

When the user selects the notice tab 1022, the screen transitions to Fig. 10 (c).

Fig. 10 (c) is a screen used by the server device 100 to displaying notifications (messages) to general consumer users. The message displayed states "crowdfunding has started for a product that you have been looking for."

When a product item has been planned based on needs information constituting search query information on the product at the electronic commerce site and has been registered as an on-sale item or a funded item, the information processing device in this embodiment of the present invention notifies consumer users who have entered search query information constituting the needs information forming the basis of the product planning.

If an item such as a product is being planned based on previously entered search query information, the item is likely to meet the needs of the consumer users who searched for it. Therefore, it would be very convenient for consumers to be notified that a product is now on sale or funding for the product has started.

Meanwhile, it is very advantageous for vendor users to be able to efficiently, effectively and inexpensively advertise or promote newly planned items such as products or solicit funding for these items.

Also, if an electronic commerce site comes to be regarded as a place where desired items are likely to be available and becomes more popular, it will become an even more attractive site for both consumer users and vendor users. As a result, sales and profits will increase and new users (consumer users and vendor users) will be acquired.

### (Other Embodiments)

The present invention can also supply a program that realizes one or more functions of the embodiments described above to a system or an device via a network or a storage medium, and these functions can be realized by the process of retrieving and executing the program in one or more processors of the computer in the system or device. The program can also be realized by a circuit (for example, ASIC) that executes one or more functions.

The present invention is not limited to the embodiments described above, and various modifications and alterations are possible without departing from the scope and spirit of the resent invention. In other words, the present invention is not limited by the description provided herein and the appended drawings.

### [Reference Signs List]

100: Server device
101: Control unit
102: Storage unit
103: Peripheral device interface unit
104: Input unit
105: Display unit
106: Communication unit
110: Bus
150: Electronic commerce providing means
200: User terminal
201: Network
202: Product database
203: General consumer and user database
204: Vendor database
205: Storage means
206: Product or service information search and acquisition means
207: Search result displaying means
208: Search query information outputting means
210: Needs information database

## Claims

1. An information processing device related to electronic commerce, the information processing device comprising:
a storage means for storing information such as product or service information related to products or services;
a product or service information search and acquisition means for searching for and acquiring product or service information registered in the storage means based on a search query inputted by a first user;
a search result displaying means for displaying results searched for and acquired by the product or service information search and acquisition means to a first user in a selectable manner;
a search query information outputting means for integrating or associating the products or services displayed by the search result displaying means with the information indicating whether or not the products or services have been selected by the first user and outputting or storing the information in the search query inputted by the first user.

2. The information processing device according to claim 1, further comprising:
a needs information displaying means for displaying search query information associated with information on whether or not product or service information was selected and outputted by the search query information outputting means ("needs information") to a second user in a selectable manner ; and
a needs information display control means that can hide or disable selection of needs information selected by the second user by other users.

3. The information processing device according to claim 1 or 2, further comprising:
a product or service planning information inputting means for allowing the second user to input planned product or service information based on selected needs information; and
a product planning information notification means for providing notification of product or service planning information that has been inputted to the first user involved in inputting the search query information associated with the needs information on which it is based.

4. A program causing a computer to function as the various means in the information processing device according to any one of claims 1 to 3.

5. A computer-readable medium storing a program causing a computer to function as the various means in the information processing device according to any one of claims 1 to 3.
